# FASCICULE DE BREVET EUROPEEN

(11) **EP 3 140 581 B1**
(45) Date de publication et mention de la délivrance du brevet: **20.11.2019**
(21) Numéro de dépôt: 15718976.2
(22) Date de dépôt: 07.04.2015
(51) Int. Cl.: F16L 23/18, F16L 23/16, F02M 26/00, F16J 15/08, F01N 13/00, F01P 5/10, F01N 13/10, F02M 35/10, F01N 13/18, F02F 11/00, F02M 26/49, F02M 26/12, F16J 15/06

(54) **RACCORD DE CONDUIT POUR VÉHICULE AUTOMOBILE**
ROHRVERBINDUNG FÜR KRAFTFAHRZEUG
PIPE CONNECTION FOR A MOTOR VEHICLE

(30) Priorité: 08.04.2014 FR 1453081
(43) Date de publication de la demande: 15.03.2017
(73) Titulaire: Valeo Systèmes de Contrôle Moteur, 95800 Cergy Saint Christophe (FR)
(72) Inventeur: RIBERA, Frédéric, F-78260 Acheres (FR); GAUTIER, Sylvain, F-95300 Ennery (FR)
(74) Mandataire: Garcia, Christine
(86) Numéro de dépôt international: PCT/FR2015/050893
(87) Numéro de publication internationale: WO 2015/155459

(56) Documents cités:
- FR-A3- 2 925 647
- US-A- 4 046 387

## Description

L'invention concerne un raccord de conduit pour véhicule automobile, une pièce comprenant un tel raccord et un assemblage de pièce dont l'une comprend ce raccord.

Dans le domaine automobile, il est connu de réaliser différentes pièces de fonderie formant plusieurs tronçons d'un même conduit de circulation d'un fluide gazeux ou liquide. On peut notamment citer l'exemple d'une vanne de recirculation des gaz d'échappement (ou vanne EGR, de l'anglais *Exhaust Gas Recirculation*), fixée sur un groupe motopropulseur d'un véhicule automobile, plus particulièrement sur la culasse du moteur, formant, ensemble, un tronçon d'un conduit de recirculation des gaz d'échappement.

Pour assurer l'étanchéité du tronçon du conduit, on met alors en œuvre un raccord avec un joint d'étanchéité. Pour assurer le maintien en position du joint d'étanchéité, il est connu de l'enserrer entre deux surfaces respectives de la vanne et de la culasse (donc entre une surface de la culasse du moteur et une surface de la vanne), par exemple entre deux brides.

Cependant, pour pouvoir s'assurer de la présence d'un joint après le montage de la vanne sur la culasse du moteur, il est connu, par exemple du document FR2925647, de faire dépasser une languette du joint de la bride de la vanne. Une telle languette, qui fait saillie par rapport à la bride, présente cependant un encombrement qui peut s'avérer problématique, notamment dans les espaces confinés au voisinage du groupe motopropulseur d'un véhicule automobile. En outre, une telle languette constitue un risque de blessure pour un opérateur, notamment quand le joint d'étanchéité est une tôle métallique. La languette peut en effet être coupante.

Il existe donc un besoin pour un raccord de conduit pour véhicule automobile ne présentant pas les inconvénients susmentionnés.

À cette fin, l'invention propose un raccord de conduit pour véhicule automobile, avec un joint d'étanchéité présentant une languette de témoin de présence, et un logement de réception de la languette de telle sorte que ladite languette soit visible une fois le raccord assemblé selon la revendication 1.

Ainsi, avantageusement, la languette du joint d'étanchéité est au moins partiellement reçue dans le logement. On réduit ainsi l'encombrement de cette languette. En outre, les risques de blessures d'un opérateur au cours du montage est également réduit.

Selon des modes de réalisation préférés, la pièce peut présenter une ou plusieurs des caractéristiques suivantes, prises seules ou en combinaison :
- le joint d'étanchéité est fixé à une surface du raccord, par exemple par clippage ;
- le joint d'étanchéité est métallique ;
- le renfoncement est conformé pour totalement recevoir la languette du joint d'étanchéité ;
- le raccord comprend une bride de fixation comportant au moins un trou, de préférence au moins deux trous, de fixation du raccord au moyen de vis ou de boulons.

Par ailleurs, selon un autre aspect, l'invention se rapporte à une pièce choisie parmi une pompe à eau, un collecteur de gaz d'échappement, un collecteur d'admission, une vanne de recirculation des gaz d'échappement et un moteur pour véhicule automobile, notamment un moteur à combustion interne pour véhicule automobile, comprenant un raccord tel que décrit ci-avant, dans toutes ses combinaisons.

L'invention se rapporte également à un assemblage comportant :
- une pièce choisie parmi une pompe à eau, un collecteur de gaz d'échappement, un collecteur d'admission et une vanne de recirculation des gaz d'échappement, et comprenant un raccord tel que décrit ci-avant dans toutes ses combinaisons, et
- un moteur pour véhicule automobile, notamment un moteur à combustion interne pour véhicule automobile.

L'invention vise finalement un assemblage comportant :
- un moteur pour véhicule automobile, notamment un moteur à combustion interne pour véhicule automobile, comprenant un raccord tel que décrit ci-avant, dans toutes ses combinaisons, et
- une pièce choisie parmi une pompe à eau, un collecteur de gaz d'échappement, un collecteur d'admission et une vanne de recirculation des gaz d'échappement.

L'invention sera mieux comprise à la lumière de la description qui va suivre, description faite en référence aux dessins annexés, parmi lesquels :

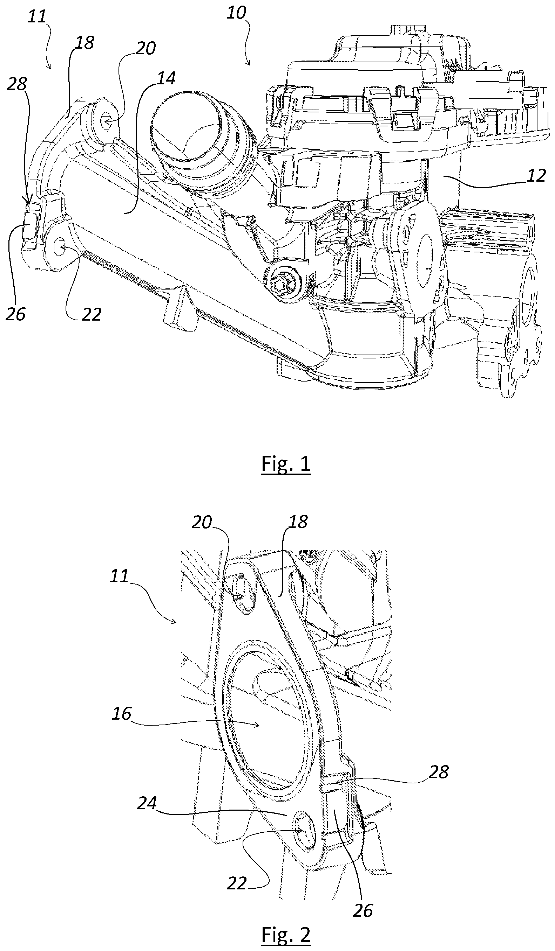

- la figure 1 représente schématiquement une vue en perspective d'une vanne EGR ;
- la figure 2 représente schématiquement en perspective, un détail de la figure 1 sous un autre angle de vue.

Telle qu'illustrée sur les figures, une vanne EGR 10 comprend un corps de vanne 12 formant un conduit de recirculation des gaz d'échappement destiné à être sélectivement obturer par une soupape ou un papillon, commandé(e) par un mécanisme motorisé. Ici, la soupape obture sélectivement le passage du conduit de recirculation des gaz d'échappement dans un conduit 14 d'admission d'air pour un moteur à combustion interne d'un véhicule automobile, non représenté. Le corps de vanne 12 forme ici un autre conduit, de circulation d'un fluide de refroidissement de la vanne. Le corps de vanne 12 est classiquement une pièce de fonderie, réalisée par moulage gravitaire ou, de préférence, par moulage sous pression pour un gain de temps de fabrication. Le corps de vanne 12 peut notamment être en alliage d'aluminium qui présente un bon compromis entre la tenue mécanique, le transfert de chaleur et le poids. Le corps de vanne 12 forme aussi un raccord 11 de fixation du corps de vanne 12 sur un groupe motopropulseur d'un véhicule automobile, ici réalisé au niveau d'une bride 18.

Le conduit d'admission 14 présente un débouché 16 au niveau de la bride 18 formée par le corps de vanne 12, autour du débouché 16. La bride 18 présente deux trous 20, 22 de fixation de la vanne 10 sur le moteur à combustion interne au moyen de vis ou de boulons. Plus précisément, la bride 18 permet de fixer la vanne 10 sur le moteur à combustion interne, de manière que le débouché 16 du conduit 14 soit disposé sensiblement en vis-à-vis du débouché d'un conduit correspondant réalisé dans le moteur à combustion interne. Notamment, les deux débouchés peuvent présenter des diamètres sensiblement égaux.

La bride 18 présente en outre une surface s'étendant autour du débouché 16 du conduit 14 destinée à venir en appui sur une surface correspondante du moteur à combustion interne pour ainsi enserrer un joint d'étanchéité 24 destiné à assurer l'étanchéité du passage du conduit 14 dans la vanne au conduit dans le moteur à combustion. Ici, de manière préférée, le joint d'étanchéité 24 est, préalablement à l'assemblage de la vanne 10 sur le moteur à combustion interne, clippé sur la bride 18. Ceci facilite en effet l'assemblage de la vanne 10 sur le moteur à combustion. Pour assurer le clippage du joint d'étanchéité 24 sur la bride 18, celle-ci peut former un léger rebord dans lequel vient s'insérer le joint d'étanchéité 24. Le joint d'étanchéité 24 peut également ou au surplus être clippé sur la bride, au niveau des trous de fixations 20, 22, le joint d'étanchéité 24 pouvant alors présenter une ou deux projections cylindriques s'étendant respectivement dans l'un des trous de fixations 20, 22.

Le joint d'étanchéité 24 peut être classiquement en caoutchouc ou en matière plastique. Cependant, pour certaines applications comme notamment pour la recirculation de gaz d'échappement, le joint d'étanchéité 24 peut être métallique, afin d'assurer son intégrité malgré les hautes températures auxquelles il est soumis du fait de la température des gaz d'échappement circulant dans le conduit d'admission 14 et de sa proximité au groupe motopropulseur.

Le joint d'étanchéité 24 présente une languette 26 de témoin de présence. Telle qu'illustrée, la languette 26 s'étend sensiblement perpendiculairement au plan du reste du joint d'étanchéité 24, destiné à être enserré entre la bride 18 et le moteur à combustion, pour assurer l'étanchéité de l'assemblage. La languette est plus facilement visible et identifiable lorsqu'elle s'étend ainsi, perpendiculairement au reste du joint d'étanchéité 24, une fois la bride 18 assemblée, c'est-à-dire fixée sur le moteur.

Pour limiter l'encombrement de cette languette 26 du joint d'étanchéité 24, la bride 18 est ici munie d'un logement 28 de réception de la languette 24. Le logement 28 peut être obtenu directement par le moulage de la vanne. Le logement est donc aisément réalisable. Ce logement 28 est ici réalisé sous la forme d'un renfoncement dans le contour de la bride 18. Plus précisément, le logement est formé ici de trois parois. En effet, le logement débouche sur deux faces distinctes de la bride, ici deux faces perpendiculaires.

Les dimensions du logement sont choisies pour que la languette 26 soit entièrement reçue dans le logement et n'en fasse donc pas saillie. Ceci peut être réalisé en choisissant pour le logement 28, des longueur, hauteur et profondeur supérieures ou égales aux longueur, hauteur et profondeur, respectivement, de la languette 26. Ainsi, la languette 24 est entourée sur trois côtés par les parois du logement 28.

Comme la languette 26 est totalement reçue dans le logement 28, son encombrement propre est nul. En outre, les risques de blessures d'un opérateur sont réduits puisque la languette ne fait pas saillie hors du logement. Cependant, la languette 26 reste visible ce qui permet à l'opérateur de vérifier la présence d'un joint d'étanchéité entre la bride de la vanne et le moteur.

L'assemblage ainsi obtenu de la vanne EGR et du moteur à combustion interne présente une bonne étanchéité du passage du conduit dans la vanne, au conduit dans le moteur à combustion interne. Par ailleurs, la présence d'un joint au niveau de la liaison de la vanne EGR et du moteur peut facilement être repérée par un opérateur grâce à la languette de témoin de présence. Enfin, l'assemblage présente une sécurité accrue pour l'opérateur le manipulant du fait de la réception de la languette dans le logement.

Bien entendu, la présente invention ne se limite pas à la description ci-dessus. De nombreuses variantes de réalisation sont accessibles à l'homme de l'art, dans le cadre de l'invention définie par le jeu de revendications ci-joint.

Ainsi, l'invention se rapporte à toute pièce, notamment de fonderie, pour véhicule automobile, comprenant un raccord tel que décrit ci-avant.

Le logement peut en outre prendre toute forme tant qu'il reçoit, au moins partiellement et de préférence totalement, la languette du joint d'étanchéité.

Notamment, dans l'exemple décrit le logement (et la languette) s'étendent sensiblement perpendiculairement à la partie du joint enserrée entre les deux pièces. Cependant, on peut imaginer que la languette s'étende parallèlement à la partie du joint enserrée entre les deux pièces, le logement s'étendant alors de manière adéquate. Ainsi, le logement peut être formé par exemple par un renfoncement dans une surface de la (première) pièce adjacente à la surface enserrant le joint et s'étendant sensiblement dans le même plan que ladite surface enserrant le joint. Dans tous les cas, la languette de témoin de présence est visible une fois le raccord assemblé.

En outre, tel que décrit en regard des figures, le logement reçoit totalement la languette du joint. Ce mode de réalisation apparaît en effet comme préféré. Cependant, on peut imaginer que la languette ne soit reçue que partiellement dans le logement, ceci permettant déjà de limiter l'encombrement de la languette et les risques de blessures d'un opérateur, notamment lors de l'assemblage de la vanne sur le moteur et après cet assemblage.

Enfin, la pièce décrite ci-avant est une vanne, notamment une vanne EGR. Mais un raccord tel que décrit ci-avant peut être prévu sur de nombreuses pièces, notamment sur toute pièce destinée à être fixée sur un moteur à combustion interne, notamment d'un véhicule automobile, pour former un assemblage. Un tel raccord peut ainsi, à titre d'exemple, être prévu sur une pompe à eau, un collecteur de gaz d'échappement ou un collecteur d'admission.

Le raccord tel que décrit ci-avant peut, en variante, être réalisé sur le moteur à combustion interne, notamment d'un véhicule automobile, plutôt que sur la pièce qu'on vient fixer sur le moteur à combustion interne.

## Revendications

1. Raccord (11) de conduit pour véhicule automobile, avec un joint d'étanchéité (24) présentant une languette (26) de témoin de présence, et un logement (28) de réception de la languette (26) de telle sorte que ladite languette (26) soit visible une fois le raccord (11) assemblé,
**caractérisé en ce que** le logement est formé par un renfoncement (28) réalisé dans une surface s'étendant dans un plan sensiblement normal au plan de la partie du joint assurant l'étanchéité du raccord,
et **en ce que** la languette (26) du joint d'étanchéité (24) s'étend dans un plan distinct du plan dans lequel s'étend la partie du joint d'étanchéité (24) destinée à assurer l'étanchéité du raccord, la languette (26) du joint d'étanchéité (24) s'étendant de préférence dans un plan normal au plan de la partie du joint d'étanchéité (24) destinée à assurer l'étanchéité du raccord..

2. Raccord selon la revendication 1, dans lequel le joint d'étanchéité (24) est fixé à une surface du raccord, par exemple par clippage.

3. Raccord selon l'une quelconque des revendications précédentes, dans lequel le joint d'étanchéité (24) est métallique.

4. Raccord selon l'une quelconque des revendications précédentes, dans lequel le renfoncement (28) est conformé pour totalement recevoir la languette (26) du joint d'étanchéité (24).

5. Raccord selon l'une quelconque des revendications précédentes, comprenant une bride de fixation (18) comportant au moins un trou (20 ; 22), de préférence au moins deux trous (20, 22), de fixation du raccord au moyen de vis ou de boulons.

6. Pièce choisie parmi une pompe à eau, un collecteur de gaz d'échappement, un collecteur d'admission, une vanne de recirculation des gaz d'échappement (10) et un moteur pour véhicule automobile, notamment un moteur à combustion interne pour véhicule automobile, comprenant un raccord selon l'une quelconque des revendications précédentes.

7. Assemblage comportant :
- une pièce choisie parmi une pompe à eau, un collecteur de gaz d'échappement, un collecteur d'admission et une vanne de recirculation des gaz d'échappement (10), et comprenant un raccord selon l'une quelconque des revendications 1 à 5, et
- un moteur pour véhicule automobile, notamment un moteur à combustion interne pour véhicule automobile.

8. Assemblage comportant :
- un moteur pour véhicule automobile, notamment un moteur à combustion interne pour véhicule automobile, comprenant un raccord selon l'une quelconque des revendications 1 à 5, et
- une pièce choisie parmi une pompe à eau, un collecteur de gaz d'échappement, un collecteur d'admission et une vanne de recirculation des gaz d'échappement (10).

## Patentansprüche

1. Leitungsverbindung (11) für ein Kraftfahrzeug mit einer Dichtung (24), die eine Vorhandenseinskontrolllasche (26) aufweist, und einer Aufnahme (28) zum Aufnehmen der Lasche (26), so dass die Lasche (26) sichtbar ist, wenn die Verbindung (11) montiert ist,
**dadurch gekennzeichnet, dass** die Aufnahme von einer Verstärkung (28) gebildet ist, die in einer Fläche ausgeführt ist, die sich in einer Ebene erstreckt, die im Wesentlichen normal zur Ebene des Bereichs der Dichtung verläuft, welche die Dichtheit der Verbindung gewährleistet,
und dadurch, dass sich die Lasche (26) der Dichtung (24) in einer Ebene erstreckt, die von der Ebene getrennt ist, in der sich der Bereich der Dichtung (24) erstreckt, der dazu bestimmt ist, die Dichtheit der Verbindung zu gewährleisten, wobei sich die Lasche (26) der Dichtung (24) vorzugsweise in einer Ebene erstreckt, die normal zur Ebene des Bereichs der Dichtung (24) verläuft, der dazu bestimmt ist, die Dichtheit der Verbindung zu gewährleisten.

2. Verbindung nach Anspruch 1, wobei die Dichtung (24) an einer Fläche der Verbindung befestigt ist, zum Beispiel durch Einrasten.

3. Verbindung nach einem der vorhergehenden Ansprüche, wobei die Dichtung (24) metallisch ist.

4. Verbindung nach einem der vorhergehenden Ansprüche, wobei die Verstärkung (28) dazu ausgebildet ist, die Lasche (26) der Dichtung (24) vollständig aufzunehmen.

5. Verbindung nach einem der vorhergehenden Ansprüche, umfassend einen Befestigungsflansch (18), der mindestens ein Loch (20; 22), vorzugsweise zwei Löcher (20, 22) zur Befestigung der Verbindung mittels Schrauben oder Bolzen aufweist.

6. Teil, das aus einer Wasserpumpe, einem Abgaskrümmer, einem Ansaugkrümmer, einem Abgasrückführventil (10) und einem Motor für ein Kraftfahrzeug, insbesondere einem Verbrennungsmotor für ein Kraftfahrzeug, ausgewählt ist, das eine Verbindung nach einem der vorhergehenden Ansprüche umfasst.

7. Anordnung, aufweisend:
- ein Teil, das aus einer Wasserpumpe, einem Abgaskrümmer, einem Ansaugkrümmer und einem Abgasrückführventil (10) ausgewählt ist und das eine Verbindung nach einem der Ansprüche 1 bis 5 umfasst, und
- einen Motor für ein Kraftfahrzeug, insbesondere einen Verbrennungsmotor für ein Kraftfahrzeug.

8. Anordnung, aufweisend:
- einen Motor für ein Kraftfahrzeug, insbesondere einen Verbrennungsmotor für ein Kraftfahrzeug, umfassend eine Verbindung nach einem der Ansprüche 1 bis 5, und
- ein Teil, das aus einer Wasserpumpe, einem Abgaskrümmer, einem Ansaugkrümmer und einem Abgasrückführventil (10) ausgewählt ist.

## Claims

1. Duct connector (11) for a motor vehicle, with a gasket (24) having a presence indicator tab (26), and a housing (28) for receiving the tab (26) such that said tab (26) is visible once the connector (11) is assembled,
**characterized in that** the housing is formed by a recess (28) produced in a surface extending in a plane substantially normal to the plane of that part of the gasket providing the sealing of the connector,
and **in that** the tab (26) of the gasket (24) extends in a plane separate from the plane in which that part of the gasket (24) intended for providing the sealing of the connector extends, the tab (26) of the gasket (24) preferably extending in a plane normal to the plane of that part of the gasket (24) intended to provide the sealing of the connector.

2. Connector according to Claim 1, in which the gasket (24) is fastened to a surface of the connector, for example by clipping.

3. Connector according to either one of the preceding claims, in which the gasket (24) is metallic.

4. Connector according to any one of the preceding claims, in which the recess (28) is configured to completely receive the tab (26) of the gasket (24) .

5. Connector according to any one of the preceding claims, comprising a fastening flange (18) comprising at least one hole (20; 22), preferably at least two holes (20, 22), for fastening the connector by means of screws or bolts.

6. Component chosen from a water pump, an exhaust-gas manifold, an intake manifold, an exhaust-gas recirculation valve (10) and an engine for a motor vehicle, in particular an internal combustion engine for a motor vehicle, comprising a connector according to any one of the preceding claims.

7. Assembly comprising:
- a component chosen from a water pump, an exhaust-gas manifold, an intake manifold and an exhaust-gas recirculation valve (10), and comprising a connector according to any one of Claims 1 to 5, and
- an engine for a motor vehicle, in particular an internal combustion engine for a motor vehicle.

8. Assembly comprising:
- an engine for a motor vehicle, in particular an internal combustion engine for a motor vehicle, comprising a connector according to any one of Claims 1 to 5, and
- a component chosen from a water pump, an exhaust-gas manifold, an intake manifold and an exhaust-gas recirculation valve (10).
